# EUROPÄISCHE PATENTSCHRIFT

(11) **EP 4 324 694 B1**
(45) Veröffentlichungstag und Bekanntmachung des Hinweises auf die Patenterteilung: **18.06.2025**
(21) Anmeldenummer: 23192299.8
(22) Anmeldetag: 19.08.2023
(51) Int. Cl.: B60P 3/36, B60R 15/02, E03C 1/01

(54) **FREIZEITFAHRZEUG MIT EINER NASSZELLE UND EINEM SCHWENKACHSENLAGER**
RECREATIONAL VEHICLE COMPRISING A WET CELL AND A PIVOT AXLE BEARING
VÉHICULE DE LOISIR AVEC UNE CELLULE HUMIDE ET UN PALIER DE PIVOTEMENT

(30) Priorität: 19.08.2022 DE 102022121092
(43) Veröffentlichungstag der Anmeldung: 21.02.2024
(73) Patentinhaber: Hymer GmbH & Co. KG, 88339 Bad Waldsee (DE)
(72) Erfinder: Steigmiller, Anton, 88444 Ummendorf (DE)
(74) Vertreter: Müller Schupfner & Partner Patent- und Rechtsanwaltspartnerschaft mbB (Muc)

(56) Entgegenhaltungen:
- EP-B1- 0 382 153
- BE-A1- 1 022 786
- BE-B1- 1 022 786
- CN-U- 211 617 550
- DE-U1- 20 003 780
- FR-A3- 2 877 625

## Beschreibung

Die Erfindung betrifft ein Freizeitfahrzeug mit vorzugsweise einer Nasszelle und einem Schwenkachsenlager, das für ein Schwenkachse einer Schwenkwand dient. Vorzugsweise dient die Schwenkwand für eine Nasszelle. Insbesondere betrifft die Erfindung das Gebiet der Freizeitfahrzeuge, die als Wohnmobil oder Wohnwagen ausgestaltet sind.

Aus der DE 10 2019 122 085 A1 und der BE 1 022 786 A1 sind Nasszellen für Campingfahrzeuge bekannt.

Hierbei ist eine Schwenkwand vorgesehen. Die Schwenkwand kann den Innenraum der Nasszelle in einen Duschraum und einen Nebenraum teilen.

Aufgabe der Erfindung ist es, ein Schwenkachsenlager für eine Schwenkachse einer Schwenkwand eines Freizeitfahrzeugs, eine Anordnung mit einem oberen Schwenkachsenlager und einem unterem Schwenkachsenlager, eine Nasszelle und ein Freizeitfahrzeug, insbesondere ein Wohnmobil oder einen Wohnwagen, anzugeben, die verbessert ausgestaltet sind.

Die Aufgabe wird durch ein Schwenkachsenlager mit den Merkmalen des unabhängigen Patentanspruchs 1, durch eine Anordnung mit den Merkmalen des Anspruchs 9, durch eine Nasszelle mit den Merkmalen des Patentanspruchs 10 und durch ein Freizeitfahrzeug mit den Merkmalen des Patentanspruchs 11 gelöst. Vorteilhafte Weiterbildung der Erfindung sind in den Unteransprüchen angegeben.

Die Aufgabe wird durch ein Schwenkachsenlager, an dem eine Schwenkachse einer Schwenkwand eines Freizeitfahrzeugs, insbesondere einer Nasszelle eines Freizeitfahrzeugs, lagerbar ist, gelöst, wobei eine Lagerbuchse vorgesehen ist, die im montierten Zustand unten an der Schwenkachse angeordnet ist, und wobei ein Siphon vorgesehen ist, in den im montierten Zustand eine durch die Schwenkachse zu dem Siphon geführte Fluidleitung mündet.

Außerdem wird die Aufgabe durch eine Anordnung mit einem oberen Schwenkachsenlager, einer Schwenkwand mit einer Schwenkachse und einem unteren Schwenkachsenlager gelöst, wobei das untere Schwenkachsenlager als solch ein Schwenkachsenlager ausgebildet ist, wobei die Schwenkachse an dem oberen Schwenkachsenlager aufgehängt und an dem unteren Schwenkachsenlager gelagert ist und wobei das untere Schwenkachsenlager demontierbar ist.

Ferner wird die Aufgabe durch eine Nasszelle für ein Freizeitfahrzeug, insbesondere ein Wohnmobil oder einen Wohnwagen, mit zumindest einem solchen Schwenkachsenlager, an dem im montierten Zustand eine Schwenkachse einer Schwenkwand gelagert ist, und/oder zumindest einer solchen Anordnung gelöst.

Außerdem wird die Aufgabe durch ein Freizeitfahrzeug, insbesondere ein Wohnmobil oder einen Wohnwagen, mit zumindest einem solchen Schwenkachsenlager, an dem im montierten Zustand eine Schwenkachse einer Schwenkwand, insbesondere einer Schwenkwand einer Nasszelle, gelagert ist, und/oder zumindest zumindest einer solchen Anordnung und/oder zumindest einer solchen Nasszelle gelöst.

Vorteilhaft ist es, dass der Siphon in einer Verlängerung der Schwenkachse angeordnet ist. Dadurch kann die Fluidleitung vorzugsweise knickfrei an den Siphon geführt und angebunden werden. Ferner kann ein direkter Fluss in den Siphon erzielt werden, der Verstopfungen insbesondere in der Fluidleitung oder im Siphon vermeidet.

Vorteilhaft ist es, dass dass die Fluidleitung in ein Zulaufstück des Siphons eingefügt, insbesondere eingesteckt, ist und/oder dass die Fluidleitung als Flüssigkeitsleitung, insbesondere Abwasserleitung, ausgebildet ist. Hierdurch kann eine vorteilhafte Demontage ermöglicht werden. Insbesondere kann hierdurch eine Reinigung vereinfacht werden.

Vorteilhaft ist es, dass ein seitlicher Fluidausgang vorgesehen ist, der vorzugsweise zumindest näherungsweise senkrecht zu der Schwenkachse orientiert ist, und dass ein Ausgang des Siphons in den seitlichen Fluidausgang führt. Dies ermöglicht eine Anordnung des Siphons direkt über einem Boden. Dadurch kann eine bodenbündige Nasszelle realisiert werden. Ein Boden der Nasszelle kann hierbei zumindest näherungsweise auf der Höhe eines Laufbodens des Freizeitfahrzeugs angeordnet sein.

Vorteilhaft ist es, dass die Lagerbuchse zum einen mittels des Siphons mit dem seitlichen Fluidausgang und zum anderen direkt mit einem seitlichen Ausgang verbunden ist und dass durch die direkte Verbindung der Lagerbuchse mit dem seitlichen Ausgang im montierten Zustand zumindest eine weitere Fluidleitung, insbesondere zumindest eine Frischwasserleitung, geführt ist. Hierdurch kann durch die Schwenkachse zum einen eine Zufuhr von Frischwasser, insbesondere Warm- und Kaltwasser, und eine Abfuhr des Abwassers erfolgen. Dadurch kann bei einer besonders bevorzugten Ausführungsform ein an der Schwenkwand montiertes Waschbecken an die Fluidleitungen, insbesondere die Warm- und Kaltwasserleitungen sowie die Abwasserleitung (Brauchwasserleitung) angeschlossen werden.

Vorteilhaft ist es, dass die Lagerbuchse so ausgestaltet ist, dass die Schwenkachse im montierten Zustand lösbar mit der Lagerbuchse verbunden ist, und dass der Siphon so ausgestaltet ist, dass die Fluidleitung im montierten Zustand lösbar mit dem Siphon verbunden ist. Dadurch kann eine vorteilhafte Demontage erfolgen, die beispielsweise bei einem Service oder einer Wartung durchgeführt werden kann.

Vorteilhaft ist es, dass der Siphon ein Rohrstück aufweist, in das oben die Fluidleitung mündet, und dass das Rohrstück unten in einen direkt über einer Bodenwand ausgestalteten, im Betrieb mit Sperrwasser gefüllten Sperraum mündet. Vorteilhaft ist es auch, dass eine Bodenwand im montierten Zustand direkt auf einem Boden, insbesondere einem Boden der Nasszelle, aufliegt. Hierdurch wird eine geringe Bauhöhe über dem Boden erreicht. Dies ermöglicht auch eine bodenbündige Ausgestaltung der Nasszelle.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer Nasszelle entsprechend einem ersten Ausführungsbeispiel in einer schematischen, räumlichen Darstellung, wobei eine Ansicht von schräg oben dargestellt ist und eine Schwenkwand an eine feststehenden Wand geschwenkt ist;
- Fig. 2: das in Fig. 1 gezeigte Freizeitfahrzeug mit der Nasszelle, wobei die Schwenkwand in die Nasszelle geschwenkt ist, um einen Duschbereich von der Toilette abzugrenzen;
- Fig. 3: ein als unteres Schwenkachsenlager ausgebildetes Schwenkachsenlager in einer auszugsweisen, schematischen Schnittdarstellung, wobei unter anderem die Funktionsweise eines Siphons veranschaulicht ist;
- Fig. 4: das in Fig. 3 gezeigte Schwenkachsenlager in einer schematischen Schnittdarstellung aus der mit IV bezeichneten Blickrichtung;
- Fig. 5: ein Freizeitfahrzeug mit einer Nasszelle entsprechend einem zweiten Ausführungsbeispiel in einer auszugsweisen, schematischen Darstellung von oben, wobei die Schwenkwand an eine Toilette geschwenkt ist; und
- Fig. 6: das in Fig. 5 gezeigte Freizeitfahrzeug, wobei die Schwenkwand von der Toilette weg geschwenkt ist.

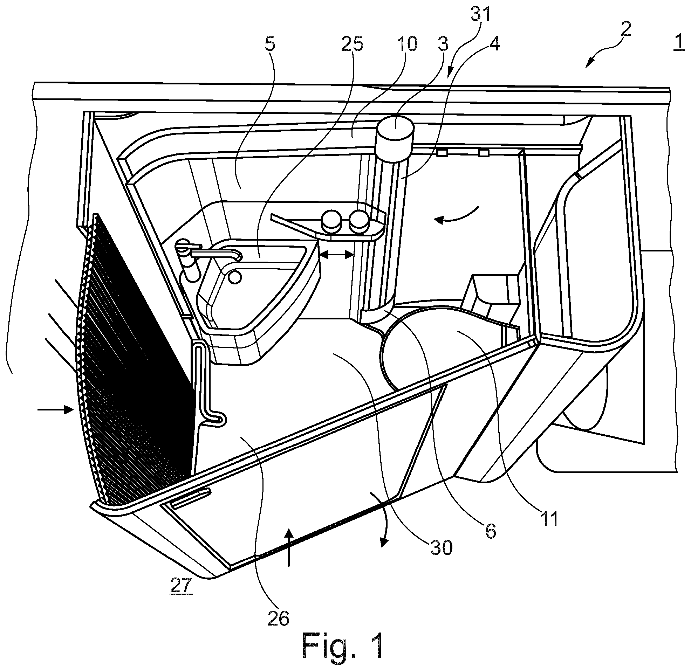

Fig. 1 zeigt ein Freizeitfahrzeug 1 mit einer Nasszelle 2 entsprechend einem ersten Ausführungsbeispiel in einer schematischen, räumlichen Darstellung, wobei eine Ansicht von schräg oben dargestellt ist. Hierbei ist in der Nasszelle 2 ein Schwenkachsenlager 3 angeordnet, an dem eine Schwenkachse 4 einer Schwenkwand 5 der Nasszelle 2 des Freizeitfahrzeugs 1 gelagert und gegebenenfalls aufgehängt ist. Das Schwenkachsenlager 3 ist als oberes Schwenkachsenlager 3 ausgebildet. Ferner ist ein Schwenkachsenlager 6 vorgesehen, das als unteres Schwenkachsenlager 6 ausgebildet ist. Zusammen mit gegebenenfalls weiteren Scharnieren oder dergleichen für die Schwenkachse 4 ist die Schwenkwand 5 im montierten Zustand schwenkbar. In der Darstellung der Fig. 1 ist die Schwenkwand 5 an an eine feststehenden Wand 10 der Nasszelle 2 geschwenkt.

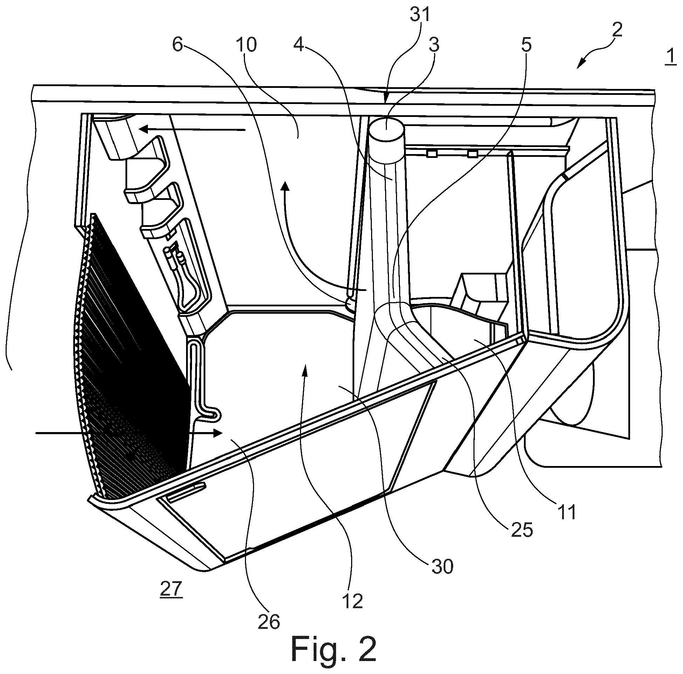

Fig. 2 zeigt das in Fig. 1 gezeigte Freizeitfahrzeug 1 mit der Nasszelle 2, wobei die Schwenkwand 5 in die Nasszelle 2 an eine Toilette 11 geschwenkt ist. Dadurch ist ein Duschbereich 12 von der Toilette 11 abgegrenzt.

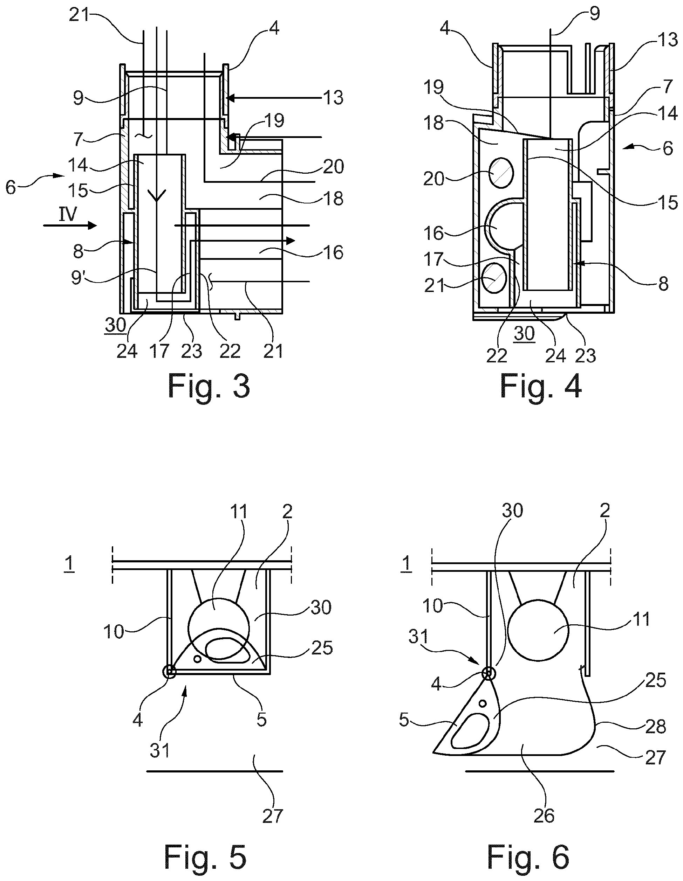

Fig. 3 zeigt das als unteres Schwenkachsenlager 6 ausgebildete Schwenkachsenlager 6 in einer auszugsweisen, schematischen Schnittdarstellung. Ferner zeigt Fig. 4 das in Fig. 3 gezeigte Schwenkachsenlager 6 in einer schematischen Schnittdarstellung aus der mit IV bezeichneten Blickrichtung. An dem Schwenkachsenlager 6 ist die Schwenkachse 4 der Schwenkwand 5 gelagert. Das Schwenkachsenlager 6 umfasst eine Lagerbuchse 7, die unten an der Schwenkachse 4 angeordnet ist. Hierbei kann die Verbindung der Schwenkachse 4 mit dem Schwenkachsenlager 6 über ein Verbindungsstück 13 erfolgen.

Das Schwenkachsenlager 6 weist einen Siphon 8 auf, in den eine durch die Schwenkachse zu dem Siphon 8 geführte Fluidleitung 9 mündet. Hierbei kann die Fluidleitung beispielsweise an einer Öffnung 14 eines Zulaufstücks 15 des Siphons 8 von oben in den Siphon 8 eingesteckt sein. Ein Fluidstrom 9' aus der Fluidleitung 9 durch den Siphon 8 und aus dem Schwenkachsenlager heraus ist mit einer Linie 9' veranschaulicht.

Der Siphon 8 ist in diesem Ausführungsbeispiel in einer Verlängerung der Schwenkachse 4 angeordnet. Dadurch ist der Fluidstrom 9' aus der Fluidleitung 9 in den Siphon 8 zumindest näherungsweise geradlinig beziehungsweise ohne wesentliche Biegungen und Krümmungen. Dadurch kann in diesem Abschnitt insbesondere eine Verstopfung durch über die vorzugsweise als Abwasserleitung 9 dienend Fluidleitung 9 mitgeführte feste und viskose Stoffe, wie Körperhaare und Seifenreste, verhindert oder zumindest vermieden werden. Somit kann die Fluidleitung 9 lösbar in das Zulaufstück 15 des Siphons 8 eingefügt, insbesondere eingesteckt, sein. Die Fluidleitung 9 kann in vorteilhafter Weise als Flüssigkeitsleitung 9 genutzt werden, wobei eine Nutzung als Abwasserleitung besonders bevorzugt ist.

An dem Schwenkachsenlager 6 ist ein seitlicher Fluidausgang 16 vorgesehen, der vorzugsweise senkrecht zu der Schwenkachse 4 orientiert ist .Ein Ausgang 17 des Siphons 8 führt in den seitlichen Fluidausgang 16. Dadurch ist die Lagerbuchse 7 über den Siphon 8 mittelbar mit dem seitlichen Fluidausgang 16 verbunden.

Die Lagerbuchse 7 ist zusätzlich direkt mit einem seitlichen Ausgang 18 verbunden. Der seitliche Ausgang 18 ist vorzugsweise von dem seitlichen Fluidausgang 16 des Schwenkachsenlagers 6 getrennt, so dass insbesondere keine Flüssigkeit, insbesondere Abwasser, aus dem Abwasserstrom 9' in den seitlichen Ausgang 18 gelangt. Durch die direkte Verbindung 19 der Lagerbuchse 7 mit dem seitlichen Ausgang 18 können weitere Fluidleitungen 20, 21, insbesondere Frischwasserleitungen 20, 21, geführt sein.

Die Lagerbuchse 7 ist so ausgestaltet, dass die Schwenkachse 4 lösbar mit der Lagerbuchse 7 verbunden ist. Ferner kann der Siphon 8 so ausgestaltet sein, dass die Fluidleitung 9 lösbar mit dem Siphon 8 verbunden ist und leicht wieder angebunden werden kann. Somit kann eine einfache Demontage und Montage ermöglicht werden, wie sie bei einer Wartung oder einem Service beispielsweise in einer spezialisierten Werkstatt möglich ist.

Der Siphon 8 umfasst ein Rohrstück 22, in das oben die Fluidleitung 9 mündet. Das Rohrstück 22 mündet unten in einen Sperraum 24, der im Betrieb mit Sperrwasser gefüllt ist, um einen Geruchsverschluss zu schaffen. Der Sperraum 24 ist direkt über einer Bodenwand 23 angeordnet, so dass eine minimale Bauhöhe über dem Boden 30 ermöglicht ist. Speziell kann eine Bodenwand 23 im montierten Zustand direkt auf einem Boden 30, insbesondere einem Boden 30 der Nasszelle 2, aufliegen.

Fig. 5 zeigt ein Freizeitfahrzeug 1 mit einer Nasszelle 2 entsprechend einem zweiten Ausführungsbeispiel in einer auszugsweisen, schematischen Darstellung von oben, wobei die Schwenkwand 5 an eine Toilette 11 geschwenkt ist. Ferner zeigt Fig. 6 das in Fig. 5 gezeigte Freizeitfahrzeug 1, wobei die Schwenkwand 5 von der Toilette 11 weg geschwenkt ist.

Diese Ausgestaltung eignet sich besonders, aber nicht ausschließlich für kleine Freizeitfahrzeuge 1. Dadurch kann eine sehr kleine Nasszelle 2 realisiert werden. Zur Benutzung eines Waschbeckens 25, das an die Schwenkwand 5 montiert ist, oder der Toilette 11 wird die Schwenkwand 5 beispielsweise in die in Fig. 6 gezeigte Stellung geschwenkt, so dass ein Bereich 26 eines Laufbodens 27 mit genutzt werden kann. Durch eine Abtrennung 28, die als Vorhang oder Faltwand ausgebildet sein kann, kann auch ein Sichtschutz oder eine Duschabtrennung realisiert werden.

Eine Versorgung des Waschbeckens 25 mit Frischwasser und ein Abfluss von Brauchwasser kann über die als Schwenktür ausgebildete Schwenkwand 5 und die Schwenkachse 4 erfolgen. Besonders bei solch einer Ausgestaltung ist die Demontierbarkeit der Schwenkwand 5 relevant, um einen Service beziehungsweise eine Wartung zu ermöglichen.

Somit kann eine Anordnung 31 mit einem oberen Schwenkachsenlager 3, einer Schwenkwand 5 mit einer Schwenkachse 4 und einem unteren Schwenkachsenlager 6 realisiert werden, bei der die Schwenkachse 4 an dem oberen Schwenkachsenlager 3 aufgehängt und an dem unteren Schwenkachsenlager 6 gelagert ist, so dass die Schwenkwand 5 demontiert werden kann. Hierbei ist auch das untere Schwenkachsenlager 6 demontierbar. Dadurch kann insbesondere eine einfache Reinigung des Schwenkachsenlagers 6 und besonders des Siphons 8 erfolgen.

Bevorzugt sind das Schwenkachsenlager 6 beziehungsweise die Anordnung 31 bei einer Nasszelle 2 vorgesehen. Das Schwenkachsenlager 6 und die Anordnung 31 können aber auch auf andere Weise oder an einer anderen Stelle bei einem Freizeitfahrzeug 1 eingesetzt werden.

## Patentansprüche

1. Schwenkachsenlager (6), an dem eine Schwenkachse (4) einer Schwenkwand (5) eines Freizeitfahrzeugs (1), insbesondere einer Nasszelle (2) eines Freizeitfahrzeugs (1), lagerbar ist, wobei eine Lagerbuchse (7) vorgesehen ist, die im montierten Zustand unten an der Schwenkachse (4) angeordnet ist, **dadurch gekennzeichnet, dass** ein Siphon (8) vorgesehen ist, in den im montierten Zustand eine durch die Schwenkachse zu dem Siphon (8) geführte Fluidleitung (9) mündet.

2. Schwenkachsenlager nach Anspruch 1,
**dadurch gekennzeichnet,**
**dass** der Siphon (8) in einer Verlängerung der Schwenkachse (4) angeordnet ist.

3. Schwenkachsenlager nach Anspruch 1 oder 2,
**dadurch gekennzeichnet,**
**dass** dass die Fluidleitung (9) in ein Zulaufstück (15) des Siphons (8) eingefügt, insbesondere eingesteckt, ist und/oder dass die Fluidleitung (9) als Flüssigkeitsleitung, insbesondere Abwasserleitung, ausgebildet ist.

4. Schwenkachsenlager nach einem der Ansprüche 1 bis 3,
**dadurch gekennzeichnet,**
**dass** ein seitlicher Fluidausgang (16) vorgesehen ist, der vorzugsweise zumindest näherungsweise senkrecht zu der Schwenkachse (4) orientiert ist, und dass ein Ausgang (17) des Siphons (8) in den seitlichen Fluidausgang (16) führt.

5. Schwenkachsenlager nach Anspruch 4,
**dadurch gekennzeichnet,**
**dass** die Lagerbuchse (7) zum einen mittels des Siphons (8) mit dem seitlichen Fluidausgang (16) und zum anderen direkt mit einem seitlichen Ausgang (18) verbunden ist und dass durch die direkte Verbindung (19) der Lagerbuchse (7) mit dem seitlichen Ausgang (18) im montierten Zustand zumindest eine weitere Fluidleitung (20, 21), insbesondere zumindest eine Frischwasserleitung, geführt ist.

6. Schwenkachsenlager nach einem der Ansprüche 1 bis 5,
**dadurch gekennzeichnet,**
**dass** die Lagerbuchse (7) so ausgestaltet ist, dass die Schwenkachse (4) im montierten Zustand lösbar mit der Lagerbuchse (7) verbunden ist, und dass der Siphon (8) so ausgestaltet ist, dass die Fluidleitung (9) im montierten Zustand lösbar mit dem Siphon (8) verbunden ist.

7. Schwenkachsenlager nach einem der Ansprüche 1 bis 6,
**dadurch gekennzeichnet,**
**dass** der Siphon (8) ein Rohrstück (22) aufweist, in das oben die Fluidleitung (9) mündet, und dass das Rohrstück (22) unten in einen direkt über einer Bodenwand (23) ausgestalteten, im Betrieb mit Sperrwasser gefüllten Sperraum (24) mündet.

8. Schwenkachsenlager nach einem der Ansprüche 1 bis 7,
**dadurch gekennzeichnet,**
**dass** eine Bodenwand (23) im montierten Zustand direkt auf einem Boden (30), insbesondere einem Boden (30) der Nasszelle (2), aufliegt.

9. Anordnung (31) mit einem oberen Schwenkachsenlager (3), einer Schwenkwand (5) mit einer Schwenkachse (4) und einem unteren Schwenkachsenlager (6), wobei das untere Schwenkachsenlager (6) nach einem der Ansprüche 1 bis 8 ausgebildet ist, wobei die Schwenkachse (4) an dem oberen Schwenkachsenlager (3) aufgehängt und an dem unteren Schwenkachsenlager (6) gelagert ist und wobei das untere Schwenkachsenlager (6) demontierbar ist.

10. Nasszelle (2) für ein Freizeitfahrzeug (1), insbesondere Wohnmobil oder Wohnwagen, mit zumindest einen Schwenkachsenlager (3) nach einem der Ansprüche 1 bis 8, an dem im montierten Zustand eine Schwenkachse (4) einer Schwenkwand (5) gelagert ist, und/oder zumindest einer Anordnung (31) nach Anspruch 9.

11. Freizeitfahrzeug (1), insbesondere Wohnmobil oder Wohnwagen, mit zumindest einem Schwenkachsenlager (6) nach einem der Ansprüche 1 bis 8, an dem im montierten Zustand eine Schwenkachse (4) einer Schwenkwand (5) , insbesondere einer Schwenkwand (5) einer Nasszelle (2), gelagert ist, und/oder zumindest zumindest einer Anordnung (31) nach Anspruch 9 und/oder zumindest einer Nasszelle (2) nach Anspruch 10.

## Claims

1. Swivelling axle bearing (6), on which a swivelling axis (4) of a swivelling wall (5) of a recreational vehicle (1), in particular of a wet room (2) of a recreational vehicle (1), can be mounted, a bearing bush (7) being provided, which is arranged at the bottom of the swivelling axis (4) in the mounted state,
**characterised in that**
a siphon (8) is provided into which, in the mounted state, a fluid line (9) guided through the swivelling axis to the siphon (8) leads.

2. Swivelling axle bearing according to claim 1,
**characterised in that**
the siphon (8) is arranged in an extension of the swivelling axis (4).

3. Swivelling axle bearing according to claim 1 or 2,
**characterised in that**
the fluid line (9) is inserted, in particular plugged, into an inlet piece (15) of the siphon (8) and/or **in that** the fluid line (9) is designed as a liquid line, in particular a waste water line.

4. Swivelling axle bearing according to one of claims 1 to 3,
**characterised in that**
a lateral fluid outlet (16) is provided, which is preferably orientated at least approximately perpendicular to the swivelling axis (4), and that an outlet (17) of the siphon (8) leads into the lateral fluid outlet (16).

5. Swivelling axle bearing according to claim 4,
**characterised in that**
the bearing bush (7) is connected on the one hand by means of the siphon (8) to the lateral fluid outlet (16) and on the other hand directly to a lateral outlet (18), and **in that** at least one further fluid line (20, 21), in particular at least one fresh water line, is guided through the direct connection (19) of the bearing bush (7) to the lateral outlet (18) in the mounted state.

6. Swivelling axle bearing according to one of claims 1 to 5,
**characterised in that**
the bearing bush (7) is designed such that the swivelling axis (4) is releasably connected to the bearing bush (7) in the mounted state, and **in that** the siphon (8) is designed such that the fluid line (9) is releasably connected to the siphon (8) in the mounted state.

7. Swivelling axle bearing according to one of claims 1 to 6,
**characterised in that**
the siphon (8) has a pipe section (22) into which the fluid line (9) opens at the top, and **in that** the pipe section (22) opens at the bottom into a blocking space (24) which is formed directly above a floor wall (23) and is filled with seal water during operation.

8. Swivelling axle bearing according to one of claims 1 to 7,
**characterised in that**
a floor wall (23) in the mounted state rests directly on a floor (30), in particular a floor (30) of the wet room (2).

9. Arrangement (31) with an upper swivelling axle bearing (3), a swivelling wall (5) with a swivelling axis (4) and a lower swivelling axle bearing (6), wherein the lower swivelling axle bearing (6) is designed according to one of claims 1 to 8, wherein the swivelling axis (4) is suspended on the upper swivelling axle bearing (3) and is mounted on the lower swivelling axle bearing (6) and wherein the lower swivelling axle bearing (6) can be dismantled.

10. Wet room (2) for a recreational vehicle (1), in particular a motorhome or caravan, having at least one swivelling axle bearing (3) according to one of claims 1 to 8, on which a swivelling axis (4) of a swivelling wall (5) is mounted in the assembled state, and/or at least one arrangement (31) according to claim 9.

11. Recreational vehicle (1), in particular a motorhome or caravan, having at least one swivelling axle bearing (6) according to one of claims 1 to 8, on which a swivelling axis (4) of a swivelling wall (5), in particular a swivelling wall (5) of a wet room (2), is mounted in the assembled state, and/or at least one arrangement (31) according to claim 9 and/or at least one wet room (2) according to claim 10.

## Revendications

1. Palier d'axe pivotant (6) au niveau duquel peut être monté un axe pivotant (4) d'une paroi pivotante (5) d'un véhicule de loisirs (1), en particulier d'un cabinet de toilette (2) d'un véhicule de loisirs (1), dans lequel il est prévu une douille de palier (7) qui, dans l'état monté, est agencée en bas au niveau de l'axe pivotant (4),
**caractérisé en ce que**
il est prévu un siphon (8) dans lequel, dans l'état monté, débouche une conduite de fluide (9) amenée à travers l'axe pivotant jusqu'au siphon (8).

2. Palier d'axe pivotant selon la revendication 1,
**caractérisé en ce que**
le siphon (8) est agencé dans une rallonge de l'axe pivotant (4).

3. Palier d'axe pivotant selon la revendication 1 ou 2,
**caractérisé en ce que**
la conduite de fluide (9) est introduite, en particulier enfoncée, dans une pièce d'arrivée (15) du siphon (8), et/ou **en ce que** la conduite de fluide (9) est réalisée comme conduite de liquide, en particulier comme conduite d'eau usée.

4. Palier d'axe pivotant selon l'une des revendications 1 à 3,
**caractérisé en ce que**
il est prévu une sortie latérale de fluide (16) qui est orientée de préférence au moins approximativement perpendiculairement à l'axe pivotant (4), et **en ce qu'**une sortie (17) du siphon (8) mène jusque dans la sortie latérale de fluide (16).

5. Palier d'axe pivotant selon la revendication 4,
**caractérisé en ce que**
la douille de palier (7) est connectée d'une part via le siphon (8) à la sortie latérale de fluide (16), et d'autre part directement à une sortie latérale (18), et **en ce que**, dans l'état monté, au moins une conduite de fluide supplémentaire (20, 21), en particulier au moins une conduite d'eau fraîche, est amenée, via la connexion directe (19) du palier de douille (7) à la sortie latérale (18).

6. Palier d'axe pivotant selon l'une des revendications 1 à 5,
**caractérisé en ce que**
la douille de palier (7) est conçue de telle sorte que l'axe pivotant (4), dans l'état monté, est connecté de manière détachable à la douille de palier (7), et **en ce que** le siphon (8) est conçu de telle sorte que la conduite de fluide (9), dans l'état monté, est connectée de manière détachable au siphon (8).

7. Palier d'axe pivotant selon l'une des revendications 1 à 6,
**caractérisé en ce que**
le siphon (8) présente une pièce tubulaire (22) dans laquelle la conduite de fluide (9) débouche en haut, et **en ce que** la pièce tubulaire (22) débouche en bas dans un espace de verrouillage (24) rempli d'eau de verrouillage, en fonctionnement, conçu directement au-dessus d'une paroi de plancher (23).

8. Palier d'axe pivotant selon l'une des revendications 1 à 7,
**caractérisé en ce que**
une paroi de plancher (23) repose, dans l'état monté, directement sur un plancher (30), en particulier un plancher (30) du cabinet de toilette (2).

9. Agencement (31) comprenant un palier d'axe pivotant supérieur (3), une paroi pivotante (5) avec un axe pivotant (4) et un palier d'axe pivotant inférieur (6), dans lequel le palier d'axe pivotant inférieur (6) est réalisé selon l'une des revendications 1 à 8, dans lequel l'axe pivotant (4) est suspendu au niveau du palier d'axe pivotant supérieur (3) et est monté au niveau du palier d'axe pivotant inférieur (6), et dans lequel le palier d'axe pivotant inférieur (6) peut être démonté.

10. Cabinet de toilette (2) pour un véhicule de loisirs (1), en particulier un camping-car ou une caravane, comprenant au moins un palier d'axe pivotant (3) selon l'une des revendications 1 à 8, au niveau duquel, dans l'état monté, un axe pivotant (4) d'une paroi pivotante (5) est monté, et/ou au moins un agencement (31) selon la revendication 9.

11. Véhicule de loisirs (1), en particulier camping-car ou caravane, comprenant au moins un palier d'axe pivotant (6) selon l'une des revendications 1 à 8, au niveau duquel, dans l'état monté, un axe pivotant (4) d'une paroi pivotante (5) est monté, en particulier d'une paroi pivotante (5) d'un cabinet de toilette (2), et/ou au moins un agencement (31) selon la revendication 9 et/ou au moins un cabinet de toilette (2) selon la revendication 10.
